(19) **Europäisches Patentamt / European Patent Office / Office européen des brevets**

(11) **EP 2 410 734 B1**

(12) **EUROPEAN PATENT SPECIFICATION**

(45) Date of publication and mention
of the grant of the patent:
**20.11.2013 Bulletin 2013/47**

(51) Int Cl.:
*H04N 5/232* (2006.01)      *H04N 5/265* (2006.01)
*G06T 5/50* (2006.01)

(21) Application number: **11174950.3**

(22) Date of filing: **22.07.2011**

(54) **Image synthesizing device, image synthesizing method and computer readable medium**

Bildsynthetisierungsvorrichtung, Bildsynthetisierungsverfahren und computerlesbares Medium

Dispositif de synthèse d'images, procédé de synthèse d'images et support lisible sur ordinateur

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.07.2010 JP 2010165968**
**18.08.2010 JP 2010182677**

(43) Date of publication of application:
**25.01.2012 Bulletin 2012/04**

(60) Divisional application:
**12197315.0 / 2 571 249**

(73) Proprietor: **CASIO COMPUTER CO., LTD.**
**Shibuya-ku,**
**Tokyo (JP)**

(72) Inventor: **Manabe, Yoshitsugu**
**Hamura-shi, Tokyo 205-8555 (JP)**

(74) Representative: **Grünecker, Kinkeldey,**
**Stockmair & Schwanhäusser**
**Leopoldstrasse 4**
**80802 München (DE)**

(56) References cited:
**EP-A1- 1 752 947      EP-A1- 1 933 271**
**US-A1- 2006 098 112      US-A1- 2007 242 900**
**US-A1- 2008 074 441**

**Description**

This application claims priority from Japanese Patent Application Nos. 2010-165968, filed on July 23, 2010, and 2010-182677, filed on August 18, 2010.

Embodiments described herein relate to an image synthesizing device, an image synthesizing method and a computer readable medium.

In a related art, pixels of continuously captured images are added and synthesized, thereby generating an image having a sufficient brightness for recording even in an environment such as a night scene in which the amount of light is not sufficient.

Further, an image synthesizing technique is disclosed in Japanese Unexamined Patent Application Publication No. 2006-148550. As disclosed in this document, in this image synthesizing technique, a fluctuation in image capture angle of view is corrected in performing image synthesis at the time of hand-held image capture in which a user captures an image by holding a camera by hand.

However, in the case of the foregoing image synthesizing technique, when a moving object exists at an image capture angle of view, an image in which an afterimage of the moving object remains will be obtained even with the use of the foregoing image synthesizing technique.

EP 1 933 271 A1 relates to an image processing method and device for synthesizing an image out of several images. A final image is synthesized by firstly evaluating if a similarity between portions of several images is high or low by means of calculating differences between several images. If the determined similarity between the images is high, the pixel information of all images is used for synthesizing this area of a final image by combining these images. In the event that the similarity is low, the pixel information of one image is used for creating the areas of the final synthesized image.

US 2008/0074441 A1 relates to image synthesis by combining several consecutively taken images while considering movement of an object. For this, a first base image, which is used for superposition with the remaining images, and a second base image, for final image combination, are selected. The superposition of the first image with the other remaining images is based on a threshold shift amount between the images. Finally, the second image and the superposition result of the first image are combined with each other.

The present invention aims for achieving a high quality photographic image when a moving object is photographed.

This is achieved by the features of the independent claims.

Other aspects and advantages of the present invention will be apparent from the following description, the drawings and the claims.

FIG. 1 is a circuit block diagram of an image capture device according to a first embodiment of the present invention;
FIG. 2 is a flow chart illustrating a procedure of processing performed by the image capture device;
FIG. 3 is a flow chart illustrating a processing procedure of a moving object determination and $\alpha$-blending process;
FIG. 4 is a diagram illustrating examples of continuously captured images obtained by continuous shooting;
FIG. 5A is a diagram illustrating a processing example obtained by a smoothing process;
FIG. 5B is a diagram illustrating a processing example obtained by an enhancement process;
FIG. 6A illustrates a synthesized image obtained by addition and synthesis;
FIG. 6B illustrates a synthesized image in the present embodiment;
FIG. 7 is a circuit block diagram of an image capture;
FIG. 8 is a flow chart illustrating a procedure of processing performed by the image capture device;
FIG. 9A is a diagram illustrating an underexposure image of images obtained by continuously shooting images while changing an exposure condition;
FIG. 9B is a diagram illustrating an overexposure image of images obtained by continuously shooting while changing the exposure condition;
FIG. 10A is a diagram illustrating a processing example obtained by a smoothing process;
FIG. 10B is a diagram illustrating a processing example obtained by an enhancement process; and
FIG. 11 is a flow chart illustrating a procedure of processing.

Hereinafter, exemplary embodiments of the present invention will be now described with reference to the drawings.

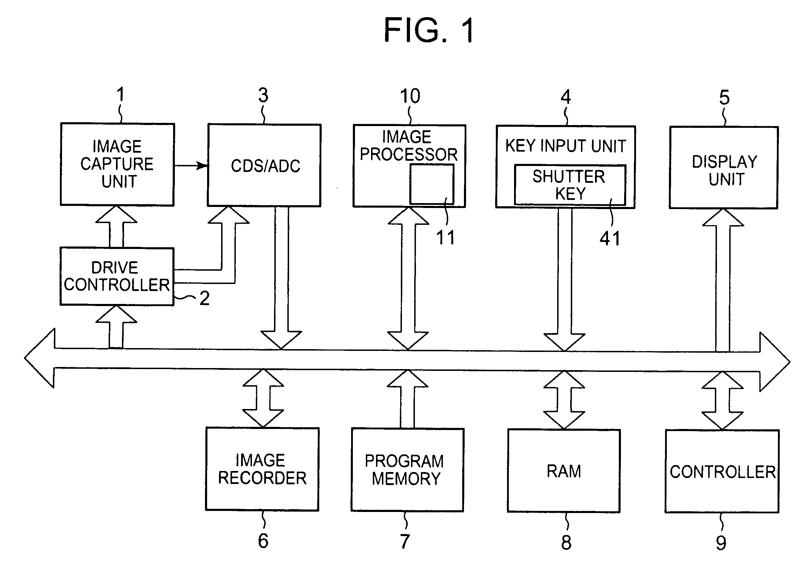

FIG. 1 is a circuit block diagram of an image capture device including an image synthesizing device according to a first embodiment of the present invention. The image capture device includes an image capture unit 1, a drive controller 2, a CDS/ADC 3, a key input unit 4, a display unit 5, an image recorder 6, a program memory 7, a RAM 8, a controller 9, and an image processor 10. These components are connected to each other via a bus line. The key input unit 4 includes a shutter key 41 for receiving a recording instruction from a person who captures an image, and the image processor 10 includes a synthesizer 11.

Referring to FIG. 1, the image capture unit 1 incorporates a driver for retaining, as accumulated electric charges, a light intensity for a given period of time and for outputting, as an analog image capture signal, the electric charges to the CDS/ADC 3 in accordance with control carried out using an image sensor such as a CMOS, RGB color filters provided on the image sensor, and the drive controller 2. Further, the image capture unit 1 acquires a plurality of images (color images) when receiving an image capture instruction from a person, who captures an image, via the shutter key 41, the controller 9  and the drive controller 2.

The CDS/ADC 3 is a circuit for receiving the analog image capture signal outputted from the image capture unit 1 and responsive to an optical image of an object. The CDS/ADC 3 includes components such as: a CDS for retaining the image capture signal; a gain control amplifier (GCA) for amplifying the image capture signal; and an A/D converter (ADC) for converting the amplified image capture signal into a digital image capture signal. It should be noted that control concerning gain control amplifier adjustment is also carried out in response to an instruction provided from the drive controller 2. Therefore, even when a plurality of images are acquired under the same exposure condition (shutter speed or F-number), generation of a plurality of images, for which conditions are different, is enabled by sequentially changing RGB gain control amplifiers and/or color shades of images.

In the present embodiment, the control concerning the gain control amplifier is carried out by the drive controller 2, but the present invention is not limited thereto. For example, the foregoing control may be carried out by the controller 9.

The key input unit 4 includes, in addition to the foregoing shutter key 41, various keys for detecting switching to an image capture mode for image acquisition/recording according to the present invention, display switching, etc.

The display unit 5 has the function of displaying a synthesized image. After a synthesizing process according to the present invention has been executed, the image recorder 6 stores or holds image data (image file) encoded in a JPEG format. The program memory 7 stores a program executed by the controller 9 and/or the image processor 10, and this program is read by the controller 9 when necessary. The RAM 8 has the function of temporarily retaining data that is generated by each process and is being processed. The controller 9 controls processing operations of the entire image capture device. The image processor 10 includes the synthesizer 11 associated with features of the present invention in addition to image data encoding/decoding processing.

Specifically, the synthesizer 11 synthesizes a single reference image, selected from continuously captured images, with a synthesized image obtained by addition and synthesis of the continuously captured images, and uses, for the resulting synthesized image, an after-mentioned moving object determination map as a transparency map (α map) provided for a difference region, thus reducing an afterimage caused by a moving object.

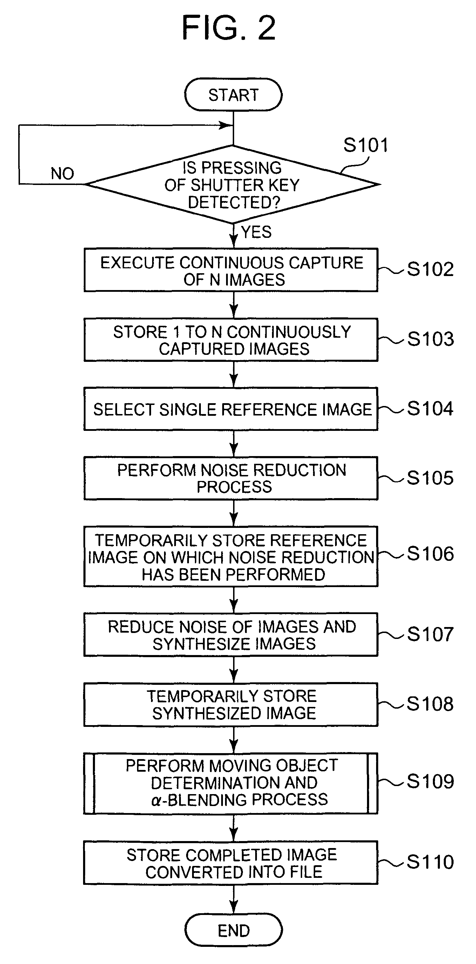

Next, operations performed in the first embodiment will be described. When a user has operated a mode button provided in the key input unit 4 and set the image capture mode according to the present embodiment, the controller 9 reads the program from the program memory 7, and starts processing as illustrated in a flow chart of FIG. 2.

Specifically, the controller 9 determines whether or not pressing of the shutter key 41 is detected (Step S101). Upon detection of the pressing of the shutter key 41, an instruction is provided to the drive controller 2 to execute continuous capture of N images (Step S102). Subsequently, based on image data obtained by the continuous capture, continuously captured images, consisting of YUV images represented by color space information of brightness/color difference, are generated and stored in the RAM 8 (Step S103).

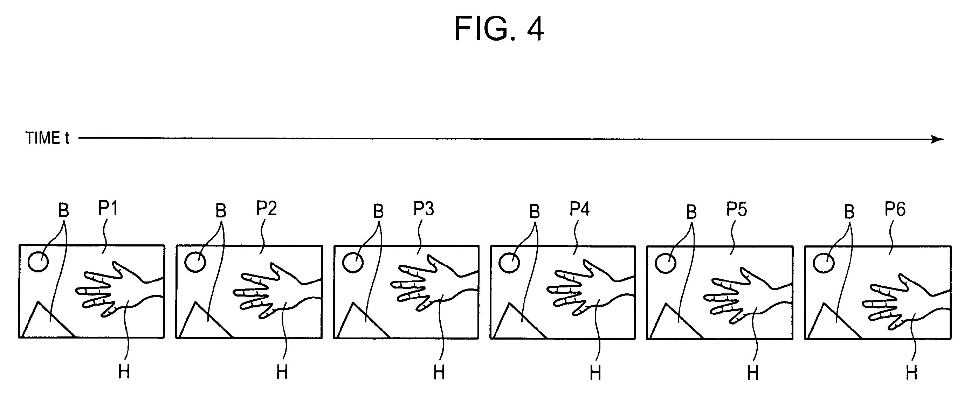

For example, when the number N of the continuously captured images is six, six continuously captured images P1 to P6 consisting of YUV images are stored in the RAM 8 as illustrated in FIG. 4. In FIG. 4, an arrow t represents a time axis, and the continuously captured images P1 to P6 are obtained by continuous capture performed at substantially the same image capture angle of view in a state where a hand H serving as a moving object is waved up and down in a background B representing the entire image capture angle of view. For the continuously captured images P1 to P6, the background B is the same; however, an image of the hand H is located at a relatively higher position in the background B in  accordance with a lapse of the time t (P1 → P2 → P3), and the image of the hand H in the image P3 is located at the highest position. Furthermore, the image of the hand H is located at a relatively lower position in the background B in accordance with a lapse of the time t (P3 → P4 → P5 → P6), and the image of the hand H in the image P6 is located at the lowest position.

Note that in the continuous capture of the continuously captured images P1 to P6, an image motion blur caused by camera shake is corrected by a known technique (e.g., a technique for correcting an angle of view by CCD shift or lens shift).

Next, a reference image is selected from the continuously captured images (Step S104). In selecting the reference image, an image in which the amount of motion of the moving object is the smallest is selected from the continuously captured images. Accordingly, from the continuously captured images P1 to P6, the image at a turning point at which the image of the hand H that has moved from a downward position to an upward position starts to move from the upward position to the downward position is selected as the image in which the amount of motion of the moving object (image of the hand H) is the smallest. In other words, the continuously captured image P3, in which the image of the hand H is located at the relatively highest position, is selected as the reference image.

Thereafter, using a LPF (low-pass filter), a noise reduction process is performed on image data of the selected reference image (Step S 105). Then, YUV image data of the reference image on which the noise reduction process has been performed is temporarily stored in the RAM 8 (Step S106). Accordingly, in the example illustrated in FIG. 4, the image data of the continuously captured image P3 is subjected to the noise reduction process by the process of Step S105, and the resulting YUV image data is stored in the RAM 8 by the process of Step S 106.

Further, a plurality of the continuously captured images are subjected to noise reduction and synthesized (Step S107). Specifically, when the YUV image data of the plurality of continuously captured images is added and averaged on a pixel-by-pixel basis, the images are allowed to be synthesized while being subjected to noise reduction. Equations (1) to (3) for addition and averaging of the YUV image data of the plurality of continuously captured images, i.e., the N continuously captured images, are provided below. It should be noted that Y_result, U_result and V_result represent information of respective pixel brightness/color difference parameters, obtained after the synthesis.

$$Y\_result = (Y[0] + Y[1] + \ldots + Y[N])/N \qquad \cdots (1)$$

$$U\_result = (U[0] + U[1] + \ldots + U[N])/N \qquad \cdots (2)$$

$$V\_result = (V[0] + V[1] + \ldots + V[N])/N \qquad \cdots (3)$$

Naturally, a processing method in this case is not limited to addition and averaging but any other processing method may be used as long as it is a synthesizing method in which a plurality of continuously captured images are used and a noise reduction effect is achieved. Then, the YUV image data of the synthesized image of the whole continuously captured images, on which noise reduction has been performed, is temporarily stored in the RAM 8 (Step S108).

Accordingly, at the time when the process of Step S 108 is ended, the following image data is temporarily stored in the RAM 8.

   (1) YUV image data of each continuously captured image
   (2) YUV image data of the reference image on which the noise reduction process has been performed
   (3) YUV image data of the synthesized image on which the noise reduction process has been performed

Then, a process for synthesizing the YUV image data (2) of the reference image with the YUV image data (3) of the synthesized image is performed in such a manner that a moving object determination and $\alpha$-blending process of the subsequent step, i.e., Step S109, is included.

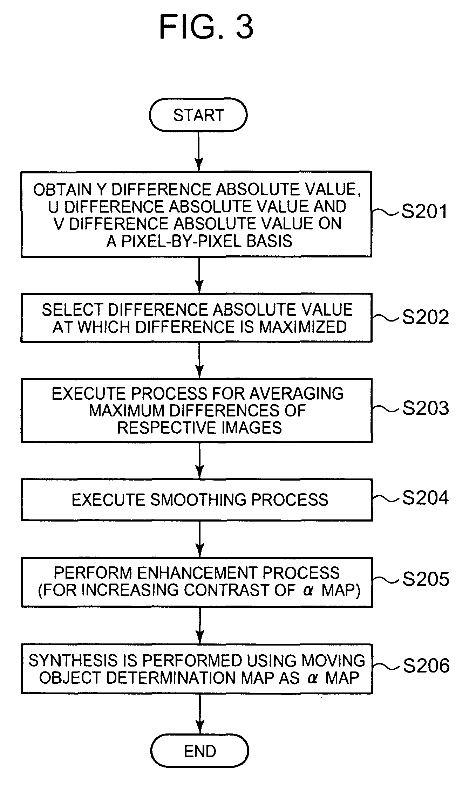

FIG. 3 is a flow chart illustrating a processing procedure of the moving object determination and $\alpha$-blending process (Step S109). In the flow chart illustrated in FIG. 3, the following equations, codes or functions will be used (see Table 1).

[TABLE 1]

| Equations, Codes or Functions | Explanation |
|---|---|
| Y_Base_Nr, U_Base_Nr, V_Base_Nr | Respective YUV parameters of the data (2) of the reference image on which the noise reduction has been performed |
| V[n], U[n], V[n] | Respective YUV parameters of the n-th image data |
| N | The number of images that are synthesized |
| fMax() | Maximum value calculation function |
| fLpf() | Smoothing function |
| fEmphasis() | Map emphasis function |

Referring to the flow chart of FIG. 3, a difference absolute value between the YUV image data (2) of the reference image on which the noise reduction process has been performed and the YUV image data (1) of each continuously captured image is obtained by the controller 9 on a pixel-by-pixel basis for the YUV image data (1) of each continuously captured image as indicated by the following equations (4) to (6) (Step S201).

$$Diff\_Y[n] = |Y\_Base\_Nr - Y[n]| \quad \cdots(4)$$

$$Diff\_U[n] = |U\_Base\_Nr - U[n]| \quad \cdots(5)$$

$$Diff\_V[n] = |V\_Base\_Nr - V[n]| \quad \cdots(6)$$

In other words, the foregoing difference absolute values are obtained on a pixel-by-pixel basis for each continuously captured image.

Furthermore, the greater the difference, the more likely it is that a region associated therewith is a region where the object is moved, and therefore, the difference absolute value at which the difference is maximized (at which the difference is maximized for the respective corresponding pixels of the continuously captured images) as indicated by the following equation (7) is selected (Step S202).

$$Diff[n] = fMax(Diff\_Y[n], Diff\_U[n], Diff\_V[n]) \quad \cdots (7)$$

Next, as indicated by the following equation (8), a process for averaging maximum differences of the respective continuously captured images except the reference image is executed (Step S203).

$$Ave\_Diff = (Diff[0] + Diff[1] + \ldots + Diff[n])/N - 1 \quad \cdots (8)$$

Moreover, as indicated by the following equation (9), a smoothing process is executed (Step S204).

$$Ave\_Diff\_Lpf = fLpf(Ave\_Diff) \quad \cdots(9)$$

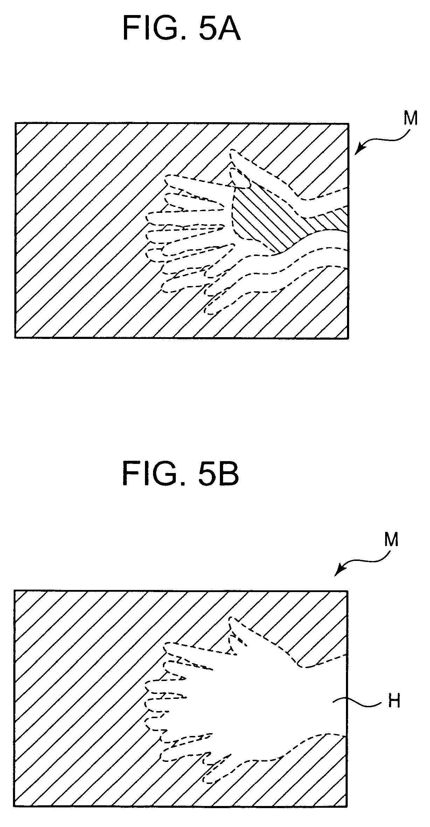

As a result of the smoothing process in Step S204, a moving object determination map M is generated as illustrated in FIG. 5A. In the moving object determination map M, a region indicated by oblique lines is a region where $\alpha = 0$ and total transmission is allowed, and a void region is a region where $\alpha = 255$ and transmission is not allowed.

Subsequently, as indicated by the following equation (10), an enhancement process is performed to increase a contrast of the moving object determination map M (Step S205).

$$Map\_Move = fEmphasis(Ave\_Diff\_Lpf) \quad \cdots (10)$$

As a result of the enhancement process in Step S205, the contrast of a region of the moving object determination map M where the images of the hands H serving as the moving objects are overlapped is increased as illustrated in FIG. 5B.

Then, finally, using the moving object determination map M (Map_Move [0~255]: 0 = no moving object) illustrated in FIG. 5B as an $\alpha$ map, the foregoing YUV image data (2) of the reference image on which the noise reduction process has been performed is synthesized with the YUV image data (3) of the synthesized image on which the noise reduction process has been performed (Step S206).

The respective YUV parameters (Y_result, U_result, and V_result) for the respective synthesized pixels are represented by the following equations (11) to (13).

$$Y\_result = (Y\_Nr\_Mix \times (255 - Map\_Move) + Y\_Base\_Nr \times Map\_Move)/255 \cdots (11)$$

$$U\_result = (U\_Nr\_Mix \times (255 - Map\_Move) + U\_Base\_Nr \times Map\_Move)/255 \cdots (12)$$

$$V\_result = (V\_Nr\_Mix \times (255 - Map\_Move) + V\_Base\_Nr \times Map\_Move)/255 \cdots (13)$$

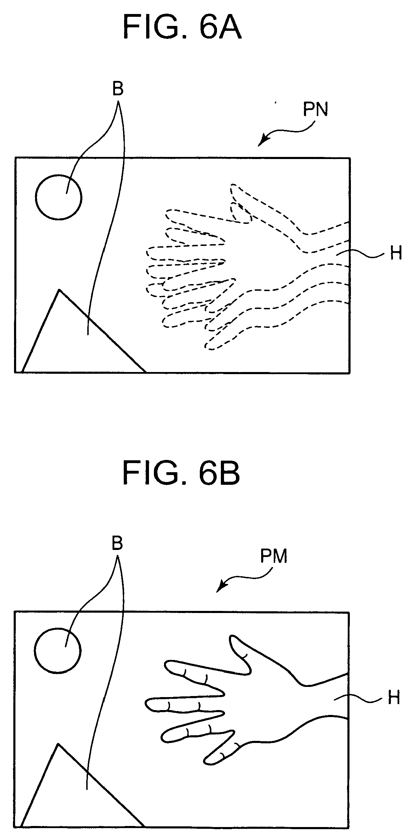

Thus, as illustrated in FIG. 6B, YUV image data representing a synthesized image PM including the background B and the hand H is generated.

For the purpose of comparison, FIG. 6A illustrates a synthesized image PN obtained simply by performing an averaging and addition process on the continuously captured images.

As illustrated in FIG. 6A, in the synthesized image PN obtained simply by performing an averaging and addition process on the continuously captured images, a large motion blur occurs in the image of the hand H serving as a moving object image. On the other hand, according to the present embodiment, the synthesized image PM in which a motion blur of the moving object is small may be obtained as illustrated in FIG. 6B even when the image of the hand H is moved.

Besides, since the smoothing process is performed in Step S204 as mentioned above, a boundary between the moving object (hand H) and the background, which is created by the synthesis, is allowed to be more natural.

In addition, the process for increasing the contrast of the map M is executed in Step S205 described above, thus also enabling a reduction in afterimage (ghost image) caused by a motion blur in the synthesizing process.

The YUV image data representing the synthesized image PM is generated in the above-described manner, thus completing the moving object determination and $\alpha$-blending process in the flow chart of FIG. 2; then, the YUV image data of the synthesized image  PM serving as a completed image is encoded in a JPEG format and converted into a file, and is recorded and stored in the image recorder 6 (Step S110), thus ending the processing.

In the first embodiment, the case where the influence of a motion blur of the moving object is reduced when a plurality of images obtained by continuous capture are simply synthesized has been described, but the present invention is not limited thereto. The device is applicable to other cases as long as images are continuously captured, and is thus also applicable to a case where images, which are continuously captured while an exposure condition is changed, are synthesized and an image with an increased dynamic range is generated.

The following description will be made on an example in which the application is applied to a case where images, which are continuously captured while an exposure condition is changed, are synthesized and an image with an increased dynamic range is generated.

In the following circuit configuration and flow chart, components similar to those of the first embodiment are identified by the same reference characters or numerals, and the description thereof will be omitted.

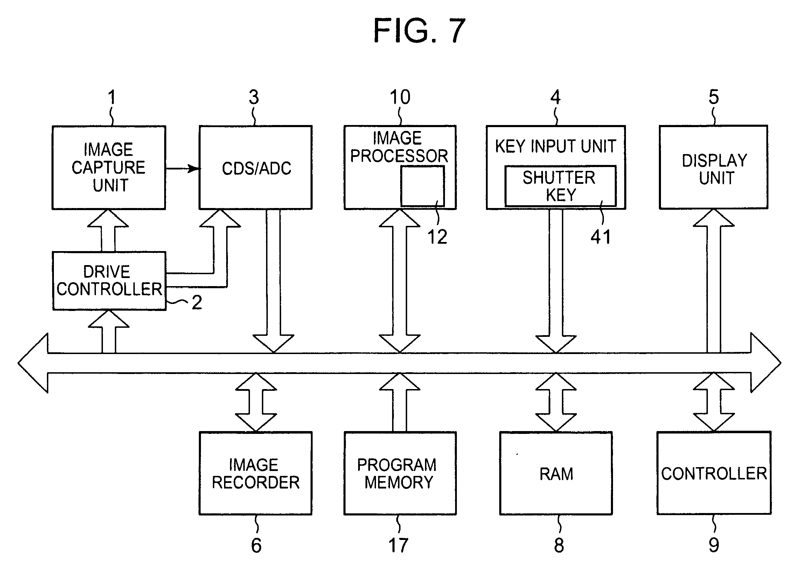

FIG. 7 is a circuit block diagram of an image capture device including an image synthesizing device. The device differs from the first embodiment in that a program memory 17 and a synthesizer 12 are provided instead of the program memory 7 and the synthesizer 11.

The program memory 17 stores a program executed by the controller 9, the image processor 10 and the synthesizer 12, and this program is read by the controller 9 when necessary.

Further, the synthesizer 12 executes synthesis of an overexposure image and a  pseudo overexposure image (described later), and uses, for the resulting synthesized image, an moving object determination map as a transparency map ($\alpha$ map) provided for a difference region, thus reducing an afterimage caused by a moving object. Furthermore, pixels of the synthesized image and an underexposure image are added and synthesized, thereby increasing a dynamic range.

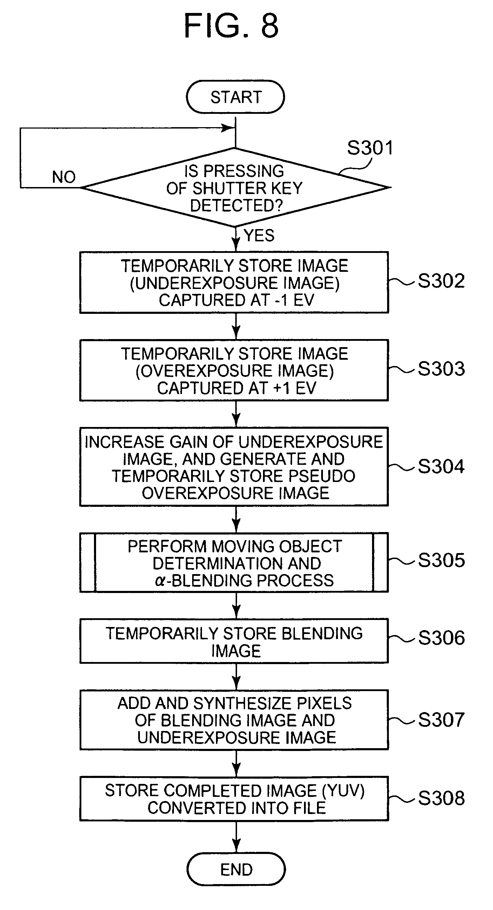

Next, operations performed in the device will be described with reference to FIG. 8. When a user has operated a mode button provided in the key input unit 4 and set the image capture mode according to the present embodiment, the controller 9 reads the program from the program memory 17, and starts processing as illustrated in the flow chart of FIG. 8.

Specifically, the controller 9 determines whether or not pressing of the shutter key 41 is detected (Step S301). Upon detection of the pressing of the shutter key 41, an appropriate exposure is detected; in addition, an instruction is provided to the drive controller 2 to execute image capture at an exposure value of -1 EV, which is reduced by "1" from an exposure value of 0 EV for the appropriate exposure, and an underexposure image obtained by the image capture at -1 EV is temporarily stored in the RAM 8 (Step S302). Subsequently, an instruction is provided to the drive controller 2 to execute image capture at an exposure value of +1 EV, which is increased by "1" from an exposure value of 0 EV for the appropriate exposure, and an overexposure image obtained by the image capture at +1 EV is temporarily stored in the RAM 8 (Step S303).

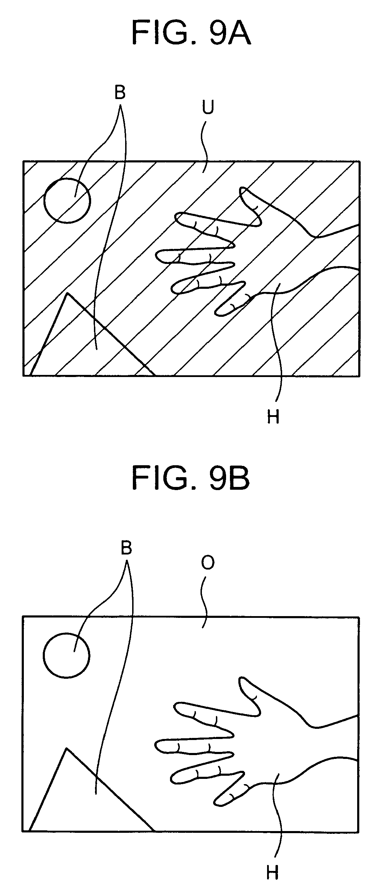

Accordingly, an underexposure image U illustrated in FIG 9A and including an YUV image and an overexposure image O illustrated in FIG. 9B and including a YUV image are stored in the RAM 8 by the processes of Steps S302 and S303, respectively (in addition, an image captured at an appropriate exposure may naturally be obtained). The continuously captured underexposure image U and overexposure image O are continuously captured at substantially the same image capture angle of view in a state where the hand H serving as the moving object is waved up and down in the background B representing the entire image capture angle of view.

The background B of the image U is the same as that of the image O, but the image of the hand H in the previously captured overexposure image O is located at a position lower than that of the image of the hand H in the subsequently captured underexposure image U.

Note that in the continuous capture of the continuously captured images U and O, an image motion blur caused by camera shake is corrected by a known technique (e.g., a technique for correcting an angle of view by CCD shift or lens shift).

Next, a gain of the underexposure image U is increased so that the exposure condition thereof is equivalent to that of the overexposure image O; thus, a pseudo overexposure image thereof is generated and temporarily stored in the RAM 8 (Step S304). Specifically, there is a fourfold difference between an image brightness of the underexposure image U captured at -1 EV and that of the overexposure image O captured at +1 EV, and the brightness of the overexposure image O is four times as high as that of the underexposure image U. Accordingly, the underexposure image U is processed at a fourfold digital gain, thereby generating the pseudo overexposure image whose exposure condition is tentatively equal to that of the overexposure image O.

Subsequently, a moving object determination and $\alpha$-blending process is performed (Step S305). This moving object determination and $\alpha$-blending process is generally similar to that performed in Step S 109 in the first embodiment, and a general process flow thereof is similar to that described with reference to FIG. 3. In the description of the flow chart of FIG. 3, the following equations, codes or functions will be used instead of the equations, codes or functions of the first embodiment (see TABLE 2).

[TABLE 2]

| Equations, Codes or Functions | Explanation |
|---|---|
| Y_Under_4, U_Under_4, V_Under_4 | YUV parameters of a pseudo overexposure image |
| Y_Over, U_Over, V_Over | YUV parameters of an overexposure image |
| fMax() | Maximum value calculation function |
| fLpf() | Smoothing function |
| fEmphasis() | Map emphasis function |

Further, in Step S201 of the flow chart of FIG. 3, the controller 9 obtains a difference absolute value between the overexposure image and the pseudo overexposure image on a pixel-by-pixel basis for both of the images as indicated by the following equations (14) to (16).

$$\text{Diff\_Y} = |\text{Y\_Under\_4} - \text{Y\_Mid}| \qquad \cdots(14)$$

$$\text{Diff\_U} = |\text{U\_Under\_4} - \text{U\_Mid}| \qquad \cdots(15)$$

$$\text{Diff\_V} = |\text{V\_Under\_4} - \text{V\_Mid}| \qquad \cdots(16)$$

In other words, the foregoing difference absolute values are obtained on a pixel-by-pixel basis for both of the images.

Furthermore, the greater the difference, the more likely it is that a region associated therewith is a region where the object is moved, and therefore, the difference absolute value at which the difference is maximized (at which the difference is maximized for the respective corresponding pixels of both of the images) as indicated by the following equation (17) is selected in Step S202.

$$\mathrm{Diff} = \mathrm{fMax}(\mathrm{Diff\_Y},\ \mathrm{Diff\_U},\ \mathrm{Diff\_V}) \qquad \cdots (17)$$

Next, as indicated by the following equation (18), a process for averaging maximum differences of both of the images is executed in Step 203.

$$\mathrm{Ave\_Diff} = (\mathrm{Diff}[0] + \mathrm{Diff}[1] + \ldots + \mathrm{Diff}[n])/N - 1 \qquad \cdots (18)$$

Moreover, as indicated by the following equation (19), a smoothing process is executed in Step S204.

$$\mathrm{Diff\_Lpf} = \mathrm{fLpf}(\mathrm{Diff}) \qquad \cdots(19)$$

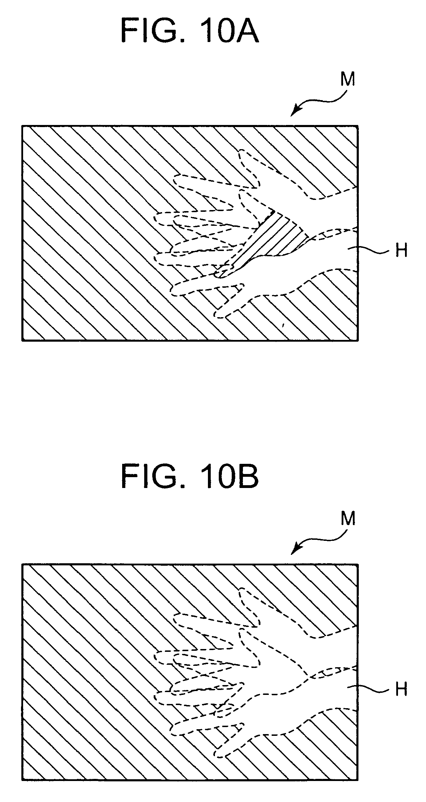

As a result of the smoothing process in Step S204, a moving object determination map M is generated as illustrated in FIG. 10A. In the moving object determination map M, a region indicated by oblique lines is a region where $\alpha = 0$ and total transmission is allowed, and a void region is a region where $\alpha = 255$ and transmission is not allowed.
Subsequently, as indicated by the following equation [20], an enhancement process is performed to increase a contrast of the moving object determination map M in Step S205.

$$\mathrm{Map\_Move} = \mathrm{fEmphasis}(\mathrm{Diff\_Lpf}) \qquad \cdots (20)$$

As a result of the enhancement process in Step S205, the contrast of a region of the moving object determination map M where the images of the hands H serving as the moving objects are located is increased as illustrated in FIG. 10B.
Thereafter, using the moving object determination map M (Map_Move [0~255]: 0 = no moving object) illustrated in FIG. 10B as an $\alpha$ map, the foregoing pseudo overexposure image and the overexposure image are synthesized in Step 206.
The respective YUV parameters (Y_result_Over, U_result_Over, and V_result_Over) for the respective pixels of the synthesized image (hereinafter referred to as a "blending image") are represented by the following equations (21) to (23).

$$\mathrm{Y\_result\_Over} = (\mathrm{Y\_Over} \times (255 - \mathrm{Map\_Move}) + \mathrm{Y\_Under\_4} \times \mathrm{Map\_Move})/255 \cdots (21)$$

$$\mathrm{U\_result\_Over} = (\mathrm{U\_Over} \times (255 - \mathrm{Map\_Move}) + \mathrm{U\_Under\_4} \times \mathrm{Map\_Move})/255 \cdots (22)$$

$$\mathrm{V\_result\_Over} = (\mathrm{V\_Over} \times (255 - \mathrm{Map\_Move}) + \mathrm{V\_Under\_4} \times \mathrm{Map\_Move})/255 \cdots (23)$$

Then, in Step S306 subsequent to Step S305 in the flow chart of FIG. 8, the blending image is temporarily stored in the RAM 8. Subsequently, the pixels of the blending image temporarily stored in the RAM 8 and the underexposure image U are added and synthesized (Step S307).
Upon generation of the YUV image data representing the synthesized image PM as described above, the YUV image data of the synthesized image PM serving as a completed image is encoded in a JPEG format and converted into a file, and is recorded and stored in the image recorder 6 (Step S308), thus ending the processing.

Variation of the device

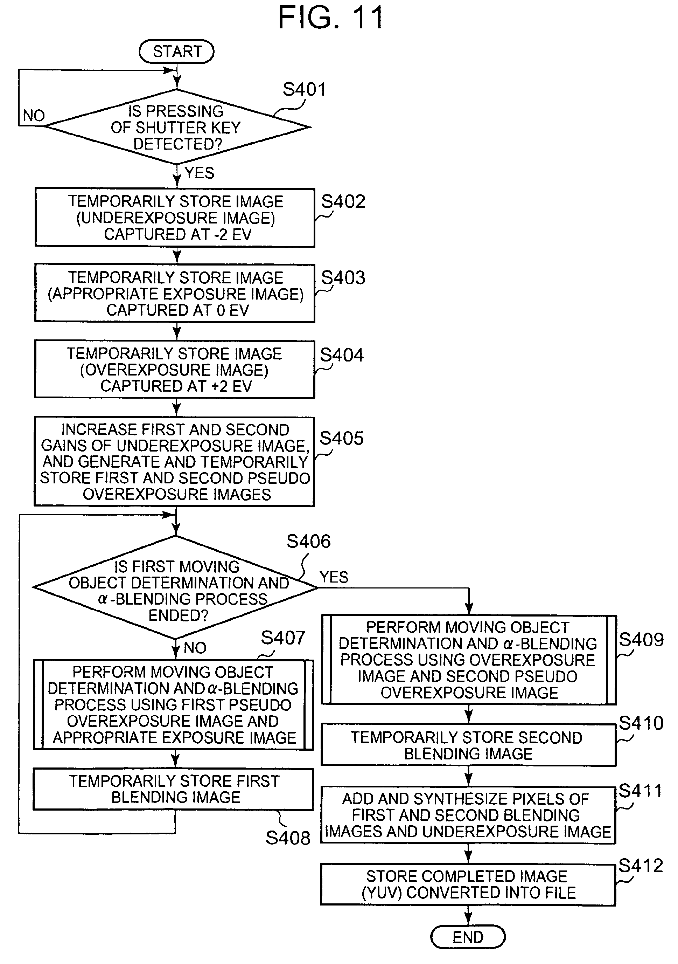

FIG. 11 is a flow chart illustrating a procedure of processing in a variation of the device, in which three images, i.e., an underexposure image, an appropriate exposure image and an overexposure image, captured at substantially the same angle of view are used. When a user has operated a mode button provided in the key input unit 4 and set the image capture mode according to the present embodiment, the controller 9 reads the program from the program memory 17, and starts processing as illustrated in the flow chart.

Specifically, the controller 9 determines whether or not pressing of the shutter key 41 is detected (Step S401). Upon detection of the pressing of the shutter key 41, an appropriate exposure is detected; in addition, an instruction is provided to the drive controller 2 to execute image capture at an exposure value of -2 EV, which is reduced by "2" from an exposure value of 0 EV for the appropriate exposure, and an underexposure image obtained by the image capture at -2 EV is temporarily stored in the RAM 8 (Step S402).

Furthermore, an instruction is provided to the drive controller 2 to execute image capture at an exposure value of 0 EV for the appropriate exposure, and an appropriate exposure image obtained by the image capture at 0 EV is temporarily stored in the RAM 8 (Step S403). Moreover, an instruction is provided to the drive controller 2 to execute image capture at an exposure value of +2 EV, which is increased by "2" from an exposure value of 0 EV for the appropriate exposure, and an overexposure image obtained by the image capture at +2 EV is temporarily stored in the RAM 8 (Step S404).

Accordingly, the underexposure image, appropriate exposure image and overexposure image, each including a YUV image, are stored in the RAM 8 by the processes of Steps S402, S403 and S404, respectively.

Next, a gain of the underexposure image is increased so that the exposure condition thereof is equivalent to that of the appropriate exposure image, and a first pseudo overexposure image is thus generated and is temporarily stored in the RAM 8; in addition, a gain of the underexposure image is increased so that the exposure condition thereof is equivalent to that of the overexposure image, and a second pseudo overexposure image is thus generated and is temporarily stored in the RAM 8 (Step S405).

Specifically, there is an eightfold difference between an image brightness of the underexposure image captured at -2 EV and that of the appropriate exposure image captured at 0 EV, and therefore, the brightness of the appropriate exposure image is eight times as high as that of the underexposure image. Accordingly, the underexposure image is processed at an eightfold digital gain, thereby generating the first pseudo overexposure image whose exposure condition is tentatively equal to that of the appropriate exposure image.

Further, there is a 16-fold difference between the image brightness of the underexposure image captured at -2 EV and that of the overexposure image captured at +2 EV, and therefore, the brightness of the overexposure image is 16 times as high as that of the underexposure image. Accordingly, the underexposure image is processed at a 16-fold digital gain, thereby generating the second pseudo overexposure image whose exposure condition is tentatively equal to that of the overexposure image. Then, the first and second pseudo overexposure images are temporarily stored in the RAM 8.

Subsequently, it is determined whether or not a first moving object determination and $\alpha$-blending process is ended (Step S406). When the moving object determination and $\alpha$-blending process has not yet been executed and the moving object determination and $\alpha$-blending process to be performed this time is the first one, the determination made in Step S406 is "NO", and the processing goes to Step S407.

Then, the moving object determination and $\alpha$-blending process is performed using the first pseudo overexposure image and the appropriate exposure image for which tentatively equal exposure values are used. A process procedure of this moving object determination and $\alpha$-blending process (Step S407) is similar to that described in the foregoing embodiment with reference to the flow chart of FIG. 3. Upon end of the moving object determination and $\alpha$-blending process performed using the first pseudo overexposure image and the appropriate exposure image, a first blending image obtained by this process is temporarily stored in the RAM 8 (Step S408), and the processing goes back to Step S406.

Then, since the first moving object determination and $\alpha$-blending process has ended, the determination made in Step S406 is "YES". Accordingly, the processing goes to Step S409 to perform another moving object determination and $\alpha$-blending process using the overexposure image and the second pseudo overexposure image for which tentatively equal exposure values are used. A process procedure of this moving object determination and $\alpha$-blending process (Step S409) is also similar to that described in the foregoing embodiment with reference to the flow chart of FIG. 3.

Upon end of the moving object determination and $\alpha$-blending process performed using the overexposure image and the second pseudo overexposure image, a second blending image obtained as a result of this process is temporarily stored in the RAM 8 (Step S410).

Subsequently, pixels of the first blending image, the second blending image and the underexposure image, which have temporarily been stored in the RAM 8, are added and synthesized, thereby generating YUV image data representing the resulting synthesized image (Step S411).

Thereafter, the YUV image data of the synthesized image PM serving as a completed image is encoded in a JPEG format and converted into a file, and is recorded and stored in the image recorder 6 (Step S412), thus ending the processing.

In this variation, the pixels of the first blending image, the second blending image and the underexposure image are added and synthesized in Step S411 so as to obtain the completed image. However, the pixels of only the first blending image and the underexposure image may be added and synthesized so as to obtain the completed image, or the pixels of the second blending image and the underexposure image may be added and synthesized so as to obtain the completed image.

Although the case where YUV image data is used has been described in the foregoing embodiments, RGB image data may alternatively be used. In that case, a square difference is similarly calculated for each of RGB components.

**Claims**

1. An image synthesizing device comprising:

   an image capturing unit (1) configured to capture a plurality of color images that are temporally continuous and that are comprised of pixels, each pixel having a pixel value for each color image component;
   an image generator (10, 11, 12) configured to generate a single synthesized image by adding said pixel values for each color image component of said plurality of images obtained by the image capturing unit (1) on a pixel by pixel basis; and
   a selector (10) configured to select a reference image among said plurality of images captured by the image capturing unit (1),
   a difference obtaining unit (10) configured to obtain differences of said pixel values for each color image component between said reference image and the remaining images of said plurality of images except the reference image on a pixel-by-pixel basis for each of said plurality of images except the reference image; and
   a blending unit (10) configured to employ differences obtained by the difference obtaining unit (10) as transparency information and to blend said reference image into said synthesized image by using said transparency information,
   **characterized in that**
   the difference obtaining unit (10) is configured to select, for each pixel, a maximum value out of said obtained differences of said pixel values for each color image component, and
   the blending unit employs said selected maximum values as transparency information.

2. The device according to claim 1, wherein the blending unit (10) is configured to average the differences between the plurality of images, and increase a contrast of the synthesized image based on the averaged differences.

3. The device according the claim 1 or 2, wherein the blending unit (10) is configured to average the differences between the plurality of images, and to smooth the synthesized image based on the averaged differences.

4. The device according to any of the claims 1 to 3, wherein the image capturing unit (1) comprises an imaging device.

5. The image device according to any of the claims 1 to 4, wherein capture angles of the respective captured images are substantially same.

6. An image synthesizing method comprising the steps of:

   capturing a plurality of color images that are temporally continuous and comprised of pixels, each pixel having a pixel value for each color image component;
   generating a single synthesized image by adding said pixel values of said plurality of images obtained in the previous step on a pixel by pixel basis;
   selecting a reference image among said plurality of images that were captured;
   obtaining differences of said pixel values for each color image component between said reference image and the remaining images of said plurality of images except for the reference image on a pixel-by-pixel basis; and
   employing obtained differences between said reference image and the remaining images as transparency information and blending said reference image into said synthesized image by means of said transparency information,
   **characterized by**
   selecting, for each pixel, a maximum value out of said obtained differences of said pixel values for each color image component, and
employing said selected maximum values as transparency information.

7. A computer-readable medium storing a program for causing the computer to perform operations according to the method of claim 6.


**Patentansprüche**

1. Eine Bildherstellungsvorrichtung umfassend:

eine Bildaufnahmeeinheit (1) eingerichtet, um eine Vielzahl von Farbbildern aufzunehmen, welche temporär kontinuierlich sind und welche Pixel beinhalten, wobei jedes Pixel für jede Farbbildkomponente einen Pixelwert besitzt;
ein Bildgenerator (10, 11, 12) eingerichtet, um ein einziges hergestelltes Bild durch die Addition der genannten Pixelwerte für jede Farbkomponente der genannten Vielzahl von Bildern, welche durch die Bildaufnahmeeinheit (1) erhalten wurden, auf einer Pixel für Pixel Basis zu generieren; und
eine Auswahlvorrichtung (10) eingerichtet, um ein Referenzbild aus der genannten Vielzahl von Bildern, welche durch die Aufnahmeeinheit (1) aufgenommen wurden, auszuwählen,
eine Unterschiederhaltungseinheit (10) eingerichtet, um Unterschiede der genannten Pixelwerte für jede Farbkomponente zwischen dem genannten Referenzbild und den verbleibenden Bildern der genannten Vielzahl von Bildern außer dem Referenzbild auf einer Pixel für Pixel Basis für jedes der genannten Vielzahl von Bildern außer dem Referenzbild zu erhalten; und
eine Mischeinheit (10) eingerichtet, um die Unterschiede, welche durch die Unterschiederhaltungseinheit (10) erhalten wurden, als eine Transparenzinformation anzuwenden und das genannte Referenzbild in das genannte hergestellte Bild durch die Benutzung der genannten Transparenzinformation zu mischen,
**dadurch gekennzeichnet, dass**
die Unterschiederhaltungseinheit (10) eingerichtet ist, um für jedes Pixel einen Maximalwert aus den genannten erhaltenen Unterschieden der genannten Pixelwerte für jede Farbbildkomponente auszuwählen, und
die Mischeinheit die genannten ausgewählten Maximalwerte als Transparenzinformation anwendet.

2. Die Vorrichtung nach Anspruch 1, wobei die Mischeinheit (10) eingerichtet ist, um die Unterschiede zwischen der Vielzahl von Bildern zu mitteln, und einen Kontrast des hergestellten Bildes basierend auf den gemittelten Unterschieden zu erhöhen.

3. Die Vorrichtung nach Anspruch 1 oder 2, wobei die Mischeinheit (10) eingerichtet ist, um die Unterschiede zwischen der Vielzahl von Bildern zu mitteln, und das hergestellte Bild basierend auf den gemittelten Unterschieden zu filtern.

4. Die Vorrichtung nach einem der Ansprüche 1 bis 3, wobei die Bildaufnahmeeinheit (1) eine Bildaufnahmevorrichtung umfasst.

5. Die Vorrichtung nach einem der Ansprüche 1 bis 4, wobei die Aufnahmewinkel der entsprechenden aufgenommenen Bilder im Wesentlichen dieselben sind.

6. Ein Bildherstellungsverfahren umfassend die Schritte:

Aufnehmen einer Vielzahl von Farbbildern, welche temporär kontinuierlich sind und welche Pixel beinhalten, wobei jedes Pixel für jede Farbbildkomponente einen Farbwert besitzt;
Generieren eines einzigen hergestellten Bildes durch die Addition der genannten Pixelwerte der genannten Vielzahl von Bildern, welche in dem vorangehenden Schritt erhalten wurden auf einer Pixel für Pixel Basis;
Auswählen eines Referenzbildes aus der genannten Vielzahl von Bildern, welche aufgenommen wurden;
Erhalten von Unterschieden der genannten Pixelwerte für jede Farbkomponente zwischen dem genannten Referenzbild und den verbleibenden Bildern der genannten Vielzahl von Bildern außer dem Referenzbild auf einer Pixel für Pixel Basis; und
Anwenden der erhaltenen Unterschiede zwischen dem genannten Referenzbild und den verbleibenden Bildern als Transparenzinformation und Mischen des genannten Referenzbildes in das genannte hergestellte Bild durch die Benutzung der genannten Transparenzinformation,
**gekennzeichnet durch**

Auswählen eines Maximalwertes für jedes Pixel aus den genannten erhaltenen Unterschieden der genannten Pixelwerte für jede Farbbildkomponente und

Anwenden der ausgewählten Maximalwerte als Transparenzinformation.

**7.** Ein Computer-lesbares Medium, welches ein Programm speichert, welches den Computer dazu veranlasst die Operationen nach dem Verfahren von Anspruch 6 auszuführen.

**Revendications**

**1.** Dispositif de synthèse d'image comprenant :

une unité de capture d'images (1) configurée pour capturer une pluralité d'images couleur qui sont continues dans le temps et qui sont constituées de pixels, chaque pixel ayant une valeur de pixel pour chaque composante d'image en couleur ;

un générateur d'image (10, 11, 12) configuré pour générer une unique image synthétisée en ajoutant lesdites valeurs de pixel pour chaque composante d'image en couleur de ladite pluralité d'images obtenues par l'unité de capture d'images (1), pixel par pixel ; et

un sélecteur (10) configuré pour sélectionner une image de référence parmi ladite pluralité d'images capturées par l'unité de capture d'images (1),

une unité d'obtention de différence (10) configurée pour obtenir les différences desdites valeurs de pixel pour chaque composante d'image en couleur entre ladite image de référence et les images restantes de ladite pluralité d'images, à l'exception de l'image de référence, pixel par pixel, pour chaque image de ladite pluralité d'images à l'exception de l'image de référence ; et

une unité de mélange (10) configurée pour utiliser les différences obtenues par l'unité d'obtention de différence (10) en tant qu'informations de transparence et pour mélanger ladite image de référence dans ladite image synthétisée en utilisant lesdites informations de transparence,

**caractérisé en ce que**

l'unité d'obtention de différence (10) est configurée pour sélectionner, pour chaque pixel, une valeur maximale desdites différences obtenues desdites valeurs de pixels pour chaque composante d'image en couleur, et

l'unité de mélange utilise lesdites valeurs maximales sélectionnées en tant qu'informations de transparence.

**2.** Dispositif selon la revendication 1, dans lequel l'unité de mélange (10) est configurée pour effectuer la moyenne des différences entre les images de la pluralité d'images et augmenter le contraste de l'image synthétisée en se basant sur les différences moyennées.

**3.** Dispositif selon la revendication 1 ou 2, dans lequel l'unité de mélange (10) est configurée pour effectuer la moyenne des différences entre les images de la pluralité d'images, et pour lisser l'image synthétisée en se basant sur les différences moyennées.

**4.** Dispositif selon l'une quelconque des revendications 1 à 3, dans lequel l'unité de capture d'images (1) comprend un dispositif d'imagerie.

**5.** Dispositif d'image selon l'une quelconque des revendications 1 à 4, dans lequel les angles de capture des images respectives capturées sont sensiblement les mêmes.

**6.** Procédé de synthèse d'image comprenant les étapes consistant à :

capturer une pluralité d'images couleur qui sont continues dans le temps et qui sont constituées de pixels, chaque pixel ayant une valeur de pixel pour chaque composante d'image en couleur ;

générer une unique image synthétisée en ajoutant lesdites valeurs de pixel de ladite pluralité d'images obtenues à l'étape précédente, pixel par pixel ; et

sélectionner une image de référence parmi ladite pluralité d'images qui ont été capturées ;

obtenir les différences desdites valeurs de pixel pour chaque composante d'image en couleur entre ladite image de référence et les images restantes de ladite pluralité d'images, à l'exception de l'image de référence, pixel par pixel ; et

utiliser les différences obtenues entre ladite image de référence et les images restantes en tant qu'informations de transparence et mélanger ladite image de référence dans ladite image synthétisée aux moyens desdites

**EP 2 410 734 B1**

informations de transparence,
**caractérisé par**
la sélection, pour chaque pixel, d'une valeur maximale desdites différences obtenues desdites valeurs de pixels pour chaque composante d'image en couleur, et
l'utilisation desdites valeurs maximales sélectionnées en tant qu'informations de transparence.

7. Support lisible par un ordinateur contenant un programme pour faire exécuter par l'ordinateur les opérations du procédé selon la revendication 6.

13

# FIG. 1

EP 2 410 734 B1

# FIG. 2

START

S101
IS PRESSING OF SHUTTER KEY DETECTED?

NO

YES

EXECUTE CONTINUOUS CAPTURE OF N IMAGES —— S102

STORE 1 TO N CONTINUOUSLY CAPTURED IMAGES —— S103

SELECT SINGLE REFERENCE IMAGE —— S104

PERFORM NOISE REDUCTION PROCESS —— S105

TEMPORARILY STORE REFERENCE IMAGE ON WHICH NOISE REDUCTION HAS BEEN PERFORMED —— S106

REDUCE NOISE OF IMAGES AND SYNTHESIZE IMAGES —— S107

TEMPORARILY STORE SYNTHESIZED IMAGE —— S108

PERFORM MOVING OBJECT DETERMINATION AND α-BLENDING PROCESS —— S109

STORE COMPLETED IMAGE CONVERTED INTO FILE —— S110

END

# FIG. 3

START

OBTAIN Y DIFFERENCE ABSOLUTE VALUE, U DIFFERENCE ABSOLUTE VALUE AND V DIFFERENCE ABSOLUTE VALUE ON A PIXEL-BY-PIXEL BASIS — S201

SELECT DIFFERENCE ABSOLUTE VALUE AT WHICH DIFFERENCE IS MAXIMIZED — S202

EXECUTE PROCESS FOR AVERAGING MAXIMUM DIFFERENCES OF RESPECTIVE IMAGES — S203

EXECUTE SMOOTHING PROCESS — S204

PERFORM ENHANCEMENT PROCESS (FOR INCREASING CONTRAST OF $\alpha$ MAP) — S205

SYNTHESIS IS PERFORMED USING MOVING OBJECT DETERMINATION MAP AS $\alpha$ MAP — S206

END

# FIG. 4

TIME t →

P1  B  H
P2  B  H
P3  B  H
P4  B  H
P5  B  H
P6  B  H

EP 2 410 734 B1

## FIG. 5A

M

## FIG. 5B

M

H

# FIG. 6A

B

PN

H

# FIG. 6B

B

PM

H

# FIG. 7

# FIG. 8

START

IS PRESSING OF SHUTTER KEY DETECTED? — S301

NO

YES

TEMPORARILY STORE IMAGE (UNDEREXPOSURE IMAGE) CAPTURED AT -1 EV — S302

TEMPORARILY STORE IMAGE (OVEREXPOSURE IMAGE) CAPTURED AT +1 EV — S303

INCREASE GAIN OF UNDEREXPOSURE IMAGE, AND GENERATE AND TEMPORARILY STORE PSEUDO OVEREXPOSURE IMAGE — S304

PERFORM MOVING OBJECT DETERMINATION AND $\alpha$-BLENDING PROCESS — S305

TEMPORARILY STORE BLENDING IMAGE — S306

ADD AND SYNTHESIZE PIXELS OF BLENDING IMAGE AND UNDEREXPOSURE IMAGE — S307

STORE COMPLETED IMAGE (YUV) CONVERTED INTO FILE — S308

END

# FIG. 9A

# FIG. 9B

# FIG. 10A

# FIG. 10B

# FIG. 11

START

S401
IS PRESSING OF SHUTTER KEY DETECTED?

NO

YES

TEMPORARILY STORE IMAGE (UNDEREXPOSURE IMAGE) CAPTURED AT -2 EV — S402

TEMPORARILY STORE IMAGE (APPROPRIATE EXPOSURE IMAGE) CAPTURED AT 0 EV — S403

TEMPORARILY STORE IMAGE (OVEREXPOSURE IMAGE) CAPTURED AT +2 EV — S404

INCREASE FIRST AND SECOND GAINS OF UNDEREXPOSURE IMAGE, AND GENERATE AND TEMPORARILY STORE FIRST AND SECOND PSEUDO OVEREXPOSURE IMAGES — S405

S406
IS FIRST MOVING OBJECT DETERMINATION AND $\alpha$-BLENDING PROCESS ENDED?

YES

NO

S407
PERFORM MOVING OBJECT DETERMINATION AND $\alpha$-BLENDING PROCESS USING FIRST PSEUDO OVEREXPOSURE IMAGE AND APPROPRIATE EXPOSURE IMAGE

TEMPORARILY STORE FIRST BLENDING IMAGE

S408

PERFORM MOVING OBJECT DETERMINATION AND $\alpha$-BLENDING PROCESS USING OVEREXPOSURE IMAGE AND SECOND PSEUDO OVEREXPOSURE IMAGE — S409

TEMPORARILY STORE SECOND BLENDING IMAGE — S410

ADD AND SYNTHESIZE PIXELS OF FIRST AND SECOND BLENDING IMAGES AND UNDEREXPOSURE IMAGE — S411

STORE COMPLETED IMAGE (YUV) CONVERTED INTO FILE — S412

END

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010165968 A
- JP 2010182677 A
- JP 2006148550 A
- EP 1933271 A1
- US 20080074441 A1